Europäisches Patentamt

European Patent Office

Office européen des brevets

(19)

(11) Publication number: **0 066 082**
**B1**

(12) # EUROPEAN PATENT SPECIFICATION

(45) Date of publication of patent specification: **03.12.86**

(21) Application number: **82103546.6**

(22) Date of filing: **27.04.82**

(51) Int. Cl.⁴: **G 06 F 9/26,** G 06 F 12/12,
G 06 F 11/00

(54) A microinstruction control storage system.

(30) Priority: **01.06.81 US 269148**

(43) Date of publication of application:
**08.12.82 Bulletin 82/49**

(45) Publication of the grant of the patent:
**03.12.86 Bulletin 86/49**

(84) Designated Contracting States:
**DE FR GB IT**

(56) References cited:
**US-A-3 800 293**
**US-A-3 958 227**

**IBM TECHNICAL DISCLOSURE BULLETIN, vol.
16, no. 8, January 1974, pages 2506-7, New
York (USA); T.D.HERMAN et al.: "Instruction
intercept for a read-only storage controlled
processor".**

**IBM TECHNICAL DISCLOSURE BULLETIN, vol.
23, no. 7A, December 1980, pages 2927-8, New
York (USA); J.A. KISELAK et al.: "Microcode
branching technique".**

**IBM Technical Disclosure Bulletin Vol. 22 No.
8B January 1980, pages 3782-3783, J.A.
KISELAK et al.: "Hybrid control store".**

(73) Proprietor: **International Business Machines
Corporation
Old Orchard Road
Armonk, N.Y. 10504 (US)**

(72) Inventor: **Nadarzynski, Edward Alexander
Cashman Dr. RD No. 4, Box 81
Hopewell Junction New York 12533 (US)**
Inventor: **Wetzel, Joseph Albert
333 Rt. 32 South
New Paltz New York 12561 (US)**

(74) Representative: **Jost, Ottokarl, Dipl.-Ing.
Schönaicher Strasse 220
D-7030 Böblingen (DE)**

(56) References cited:
**IBM Technical Disclosure Bulletin, vol.23, No.
10, March, 1981, pages 4627-4628 J.L.
REGEHR.: "Alterable-patch circuits for read-
only storage".**

**EIKE JESSEN, "Architektur digitaler
Rechenanlagen" Springer Verlag, 1975, pages
88-91**

**RAINER KLAR et al.: "Mikroprogrammierung",
Band 8, No. 3, Erlangen, Juni 1975. pages
40-41.**

Courier Press, Leamington Spa, England.

**Description**

The present invention relates to a microprogram control store element (CSE) in a data processing system, and more particularly to a CSE comprised of a read-only store (ROS) and a writeable control store (WCS), dynamically changed during data processing by transfer of microcode from main storage to the WCS, and wherein the WCS is utilized to provide a substitute microinstruction for a known erroneous microinstruction accessed from the ROS.

The following U.S. patents, all assigned to the assignee of the present invention, disclose various elements of a control store mechanism utilizing the present invention:

1. U.S. Patent 3,800,293 issued March 26, 1974, entitled "Microprogram Control Sub-System" by T. A. Enger et al.

2. U.S. Patent 3,958,227 issued May 18, 1976, entitled "Control Store System With Flexible Control Word Selection" by C. W. Evans.

3. U.S. Patent 3,976,865 issued August 24, 1976, entitled "Error Detector For An Associative Directory Or Translator" by T. A. Enger.

4. U.S. Patent 4,008,460 issued February 15, 1977, entitled "Circuit For Implementing A Modified LRU Replacement Algorithm For A Cache" by L. R. Bryant et al.

In stored program data processing systems, two techniques for control of the data processing system are normally implemented. One involves the design of hardwired sequencers, and the other involves the design of a control store element (CSE) comprised of storage devices for storing sequences of microinstructions making up microprograms. In either case, machine instructions transferred from main storage to the central processing unit will be interpreted to define the coding of an operation code portion of the instruction to determine the function to be performed such as Add, Subtract, Multiply, etc. When a CSE is utilized, the operation code will normally be utilized to address a storage device to access the first microinstruction of a microprogram effective to execute the function called for by the operation code.

An excellent discussion of the various forms that a CSE can take is found in an article entitled "Microprogramming: Perspective and Status" by A. J. Agrawala and T. G. Rauscher, IEEE Transactions On Computers, Volume C-23, No. 8, August 1974, page 817. One form of CSE includes at least two types of storage devices utilized for storing sequences of microinstructions making up microprograms. One type of storage device is a read-only store (ROS), and the other is a writeable control store (WCS). The ROS will be comprised of binary bit patterns which make up addressable microinstructions and which, during operation of the data processing system, will never be altered. In some data processing systems, the ROS may in fact be a permanently configured storage device created during manufacture of the data processing system. Another form of ROS would be a volatile storage device in which information can be stored, as necessary, but once initialized or loaded with microinstructions, will thereafter not be modified during processing functions. On the other hand, a WCS will be an addressable storage device of the read-write type wherein microinstructions can be dynamically stored into the storage device and thereafter read or accessed for use, and would be dynamically changed as conditions required during data processing. Examples of this type of CSE configuration are represented by U.S. Patents 3,478,322 and 3,735,363.

Contemporary data processing systems which include a CSE, also included a central processing unit and a main storage device for the storage of data and programs to be executed by the system. Also included is a processor controller, or console, which provides basic control for the entire system. It is the function of the processor controller, when power is turned on to the data processing system, to load necessary information into the data processing system.

The main storage device has a portion reserved for a number of system control data blocks, including all of the microprograms required to operate the system. This reserved portion of main storage is not addressable by program instructions executed by the system, but is primarily addressable by the central processing unit under control of microinstructions. To initialize the data processor, the processor controller will transfer all of the microcode, and other control information required by the system, to the reserved portion of main storage. By utilizing special data paths, the processor controller has the ability to store prespecified information into various registers, triggers, or storage arrays within the central processing unit, including the ROS of the CSE, if the ROS is a read-write type of storage device. If the ROS is a permanent storage device this would not be required. When a WCS is provided, this may be initialized by the processor controller or, as a minimum, the processor controller will store all of the microcode that may be utilized in the WCS into the main storage device.

The use of ROS in a CSE is normally for frequently used microcode. Its construction is such that it is very dense and high speed, but is relatively expensive when compared with a WCS. As the design of a data processing system progresses, a point will be reached where all of the microprograms have been written for the frequent processing functions required. A ROS storage device will be manufactured with the permanent bit patterns required to provide the necessary sequence of microinstructions. It is frequently discovered during the data processing system design, or after design has been completed, that certain of the previously created microinstructions in the ROS are erroneous. Another error situation that can occur with the ROS, even after the entire data processing system has been designed and erroneous microinstructions corrected, is that the hardware mechanism of the ROS may develop a failure which is permanent. Also, the creation of microcode that is permanently stored in a ROS is initially dictated by known features, functions and instructions to be executed when the data processing system is designed. New features, changing functions, or newly defined program instructions requiring modifications to the bit patterns of a ROS would require a long and expensive procedure, and systems already in use could not be modified easily.

Special measures have to be taken in cases where microprogram control subsystems with two control stores are used, one of which is accessed and utilized only on the first cycle of a microprogram sequence utilized to execute an information handling system instruction. A portion of the operation code of the system instruction is used to address the first-cycle control store to provide access to a microinstruction having fewer binary bits than normal microinstructions, and is effective to direct access to the remainder of the microprogram sequence contained in the other control store.

The primary function of the first microinstruction from the first control store is to provide a next address indication for obtaining the second and all following microinstructions for the system instruction execution. Since only a portion of the operation code was utilized to access the first control store for the first microinstruction, the remaining binary bits of the operation code are utilized in the branch decision logic to select one of the gates at the output of one of a plurality of control store modules forming the other control store for selection of the proper microinstruction utilized on the second cycle of instruction.

So it is an object of the present invention to provide microcode assisted corrective action in a CSE handling first- and second-cycle microinstructions which is unknown to a user or the remainder of the data processing system, except for a time lapse and in a CSE for a faulty microinstruction read from a ROS utilizing apparatus normally used for transfer of microcode, as needed, from the main store of a data processing system to a WCS.

This object of the invention is solved by the features in the claim.

These advantages of the invention are realized in a data processing system that includes a main storage device, central processing unit, processor controller, and control storage element (CSE). The CSE includes, for the storage of microinstructions, a read-only store (ROS) and a writeable control store (WCS). The ROS contains a predetermined number of addressable microinstructions. The WCS functions essentially like a high-speed buffer, or cache, found between the main store and the CPU of many data processing systems. That is, the WCS contains a small number of microinstructions of all of the microinstructions which can be stored in the area reserved in the main store for microcode. The WCS is a fully associative storage device which includes an address directory for identifying and locating microinstructions in the WCS by using the main store address utilized for accessing the main store for the transfer of a group of microinstructions to the WCS. Since the WCS has a limited capacity, a least recently used (LRU) replacement algorithm is implemented. As new microinstructions are transferred from main store to the WCS, the replacement algorithm identifies the portion of the WCS to be replaced by the new group of microinstructions. The WCS functions in accordance with the teachings of the above-identified references 3 and 4. The dynamic, as-needed, transfer of groups of microinstructions from main storage to the WCS is similar to data transfer between I/O devices and main storage, and is called "paging". Therefore, the use of the WCS in this fashion prompts a re-naming to pageable control store (PCS).

The subject invention utilizes the previously defined mechanism to provide corrective action for errors in the CSE. The invention includes a storage device known as a halt array and an address substitution mechanism comprised of two storage arrays. The halt array includes a single bit position associated with each microinstruction that can be addressed in the ROS. As errors are noted in the operation of particular microinstructions read from ROS, maintenance personnel will provide necessary information in the processor controller to cause the associated bit position of the halt array to be changed to a binary 1. The halt array is accessed with the same microinstruction address utilized to access the ROS. When the corresponding bit position is read out and detected as a binary 1, the execution of the faulty microinstruction is prevented.

In response to the halt signal from the halt array, the address of the faulty microinstruction in ROS is utilized in an address substitution mechanism which provides an address translation function to address the location in main storage of the microinstruction to be substituted for the faulty microinstruction.

When the address substitution mechanism has provided the main store address, the previously defined PCS address directory and transfer mechanism is utilized to cause the substitute microinstruction to be accessed from PCS to provide correct operation for that microinstruction cycle. If the directory indicates a match, PCS already contains the substitute microinstruction and will be immediately accessed. A miss in the directory will initiate a transfer from main storage. Normal processing will resume after the substitute microinstruction has been executed.

Maintenance personnel using the processor controller mechanism specify substitute main store addresses which provides the ability to compress the amount of main storage addresses required to identify a particular substitute microinstruction for only the faulty microinstructions addressed from ROS. When the system is initialized, the processor controller data path to the CSE will be utilized to load the current information into the halt array and address substitution mechanism, which provides the translated addresses for accessing main store.

In the present embodiment, only 2K main storage addresses must be reserved to provide substitute microinstructions for any of 8K faulty ROS microinstructions, plus 256 first-cycle microinstructions. Further, permanent main storage address information can be stored in the first and second arrays of the address substitution mechanism. The first and second arrays of the address substitution mechanism are accessed with first and second portions of an input binary number which overlap, but is effected by not utilizing the XY branch decode bits used for accessing ROS. The XY branch bits are saved in case the main store address generated is required to provide a substitute microinstruction for more than one erroneous microinstruction in a particular branch group. Maintenance personnel will insert a proper microinstruction in main storage at the address generated, to either provide the substitute microinstruction for a single erroneous microinstruction from ROS, or will insert a microinstruction based on the previously stored XY branch decode bits. The present invention not only resolves more than one microinstruction error in a particular branch group, but also provides corrective action for a first cycle microinstruction word, and is therefore capable of resolving the corrective action required for five faulty microinstructions.

The invention is defined with particularity in the appended claim. The above and further objects and advantages of this invention may be better understood by referring to the following detailed description taken in conjunction with the accompanying drawings, in which

FIGURE 1 is a block diagram showing the major components of a control store element (CSE).

FIGURE 2 is a block diagram showing the addition of the present invention, and its relationship, to certain portions of FIGURE 1.

FIGURE 3 is a representation of the main storage address compression achieved utilizing the address substitution mechanisms of the present invention.

FIGURE 4 is a block diagram of one implementation of an address substitution mechanism.

FIGURE 5 is a representation explaining the theory for achieving compression of main store addresses resulting from an address substitution mechanism shown in FIGURE 4.

FIGURE 6 is a block diagram of the address substitution mechanism of the present invention providing address translation achieving further main store address compression.

FIGURE 7 is a representation of a microinstruction sequence utilized in the address substitution mechanism of FIGURE 6.

Detailed Description of Invention

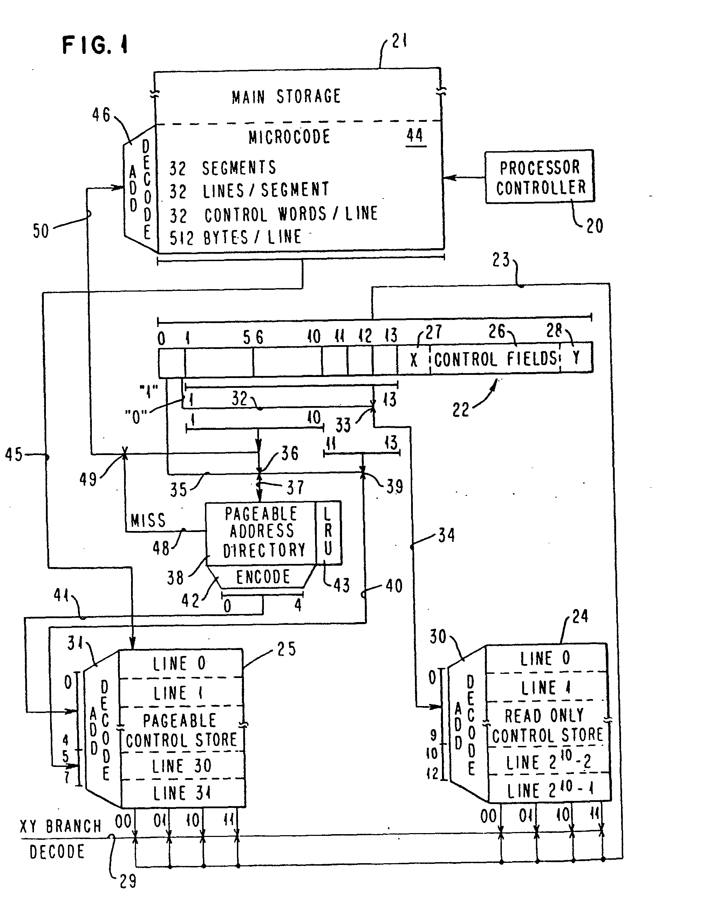

FIGURE 1 is a block diagram showing the relationship of a Processor Controller 20, Main Storage 21, and a Control Store Element (CSE) of a contemporary data processing system. Only that portion of a CSE required to understand the present invention is shown. The CSE includes a Control Store Data Register (CSDR) 22 which stores, for each cycle, a microinstruction received on line 23 from either a Read-Only Control Store (ROS) 24 or a Pageable Control Store (PCS) 25.

Each microinstruction stored in CSDR 22 includes a number of control fields 26, the decoding of which control the data flow, logic, and arithmetic of a data processing system. In many contemporary data processing systems utilizing a CSE, each microinstruction also includes the information necessary to address the next microinstruction in sequence. The address of the next microinstruction, often referred to in the literature as the next address (NA), includes CSDR 22 bit positions 0 through 13. To provide branching capability in a microinstruction sequence, each microinstruction also includes an X-branch control field 27 and a Y-branch control field 28. The branch control fields 27 and 28 are coded to select a particular data processing machine condition to provide coded information for accomplishing a microprogram branch. The use of the branching capability will be discussed subsequently. An understanding of this capability is completely defined in the above cited Reference 2 (US—A—3958227 or EP—A—66083). The results of the branching capability are effective on a line 29 in FIGURE 1 to select one of four possible microinstructions addressed and accessed from either the ROS 24 or PCS 25 to transfer the selected microinstruction on line 23 to the CSDR 22.

A microprogrammer who is creating the sequence of microinstructions for the data processing system will have the ability to code each microinstruction in the CSDR 22 to cause addressing and accessing of microinstructions from either the ROS 24 or PCS 25. This selection is made by the state of NA bit position 0. A binary "0" will cause the remainder of the NA bit positions to be effective at Address Decode 30 to effect access and readout of ROS 24. A binary "1" in NA bit position 0 will cause Address Decode 31 associated with PCS 25 to be effective.

When NA bit position 0 is a binary "0", as signalled on line 32, the gate 33 will be effective to transfer NA bits 1 through 13 on lines 34 to the address decode 30 of ROS 24. When NA bit 0 is a binary "1", as signalled on line 35, a gate 36 will be enabled to transfer NA bits 1 through 10 on a line 37 to a Pageable Address Directory 38, the function of which will be subsequently described. The signal on line 35 will also enable a gate 39 to transfer NA bits 11 through 13 on line 40 to be part of the address utilized in Address Decode 31 of PCS 25. The remainder of the address utilized in the address decode 31 of PCS 25 is transferred on line 41 from an Encode mechanism 42 associated with the Pageable Address Directory 38.

The proper operation of the Pageable Address Directory 38 requires a replacement algorithm which is provided by an LRU mechanism 43. The function of the Pageable Address Directory 38, Encode mechanism 42, and LRU mechanism 43 are thoroughly described in the above cited References 3 and 4.

As indicated earlier, an area 44 is reserved in Main Storage 21 for the microcode which is to be transferred to the PCS 25 as required. The reserved area 44 is loaded with microcode from the Processor Controller 20. Each time a quantity of microcode is to be transferred from Main Storage 21 to PCS 25 on line 45, Main Storage 21 will be addressed by an Address Decode mechanism 46 to cycle and transfer 512 consecutive 8-bit bytes on line 45 to PCS 25. The 512 bytes are configured to provide 32 microinstructions. These 32 microinstructions are identified as a "line" of microcode.

In accordance with the manner in which the NA bits 1 through 13 are configured, NA bits 11, 12 and 13, along with the final 2 bits provided by the XY branching capability, identify a particular microinstruction within a line of 32 microinstructions. The remainder of the NA bits are configured to provide identification of segments and lines within segments. That is, NA bits 1 through 5 are capable of identifying 32 segments of microcode and NA bits 6 through 10 are capable of identifying 32 lines within a particular segment of microcode. This addressing capability of NA bits 1 through 13 and the XY branch bits provides an addressing capability of 32K (K = 1,024) microinstructions that could be stored in the reversed area 44. A preferred embodiment for the present invention utilizes less than this capability. In particular, the ROS 24 has been designed to permanently store 8K microinstructions. Therefore, whereas the Address Decode mechanism 30 is shown to be receiving 13 NA bits, only NA bits 3 through 13, along with the XY branch selection, are required to provide access to one of the 8K microinstructions.

As shown in FIGURE 1, the PCS 25 is configured to include 32 lines of microcode totaling 1K microinstructions. In accordance with the teaching of the above-cited References 3 and 4, each NA specifying a pageable main store address, indicated on line 35, will initiate an associative search in the Pageable Address Directory 38 to determine which line of PCS 25 contains the microcode line being addressed. If the line requested is stored in PCS 25, an associated one of the registers in the Pageable Address Directory 38, indicates the match and its identity will be encoded by Encode mechanism 42 to provide the five address bits required on line 41 to select the proper line in PCS 25. The remainder of the NA bits 11 through 13 will be transferred on line 40 to the Address Decode mechanism 31 to select a branch-group of four microinstructions from the line. The particular one of the microinstructions in the branch-group to be transferred on line 23 to CSDR 22 is selected by the XY Branch Decode 29.

If the line of pageable microcode identified by NA bits 1 through 10 do not find a match in the Pageable Address Directory 38, a signal on line 48 indicating a Miss will be effective at a gate 49 to transfer the NA bits 1 through 10 on line 50 to the Address Decode mechanism 46 to initiate transfer of the 512 bytes comprising the line of microcode required on line 45 to PCS 25. The LRU mechanism 43, in accordance with the teaching of Reference 4, will select the line of PCS 25 least-recently used to receive and store the line of microcode. The line of PCS 25 selected by the LRU mechanism 43 will cause the next address bits 1 through 10 to be stored in the associated register of the Pageable Address Directory 38.

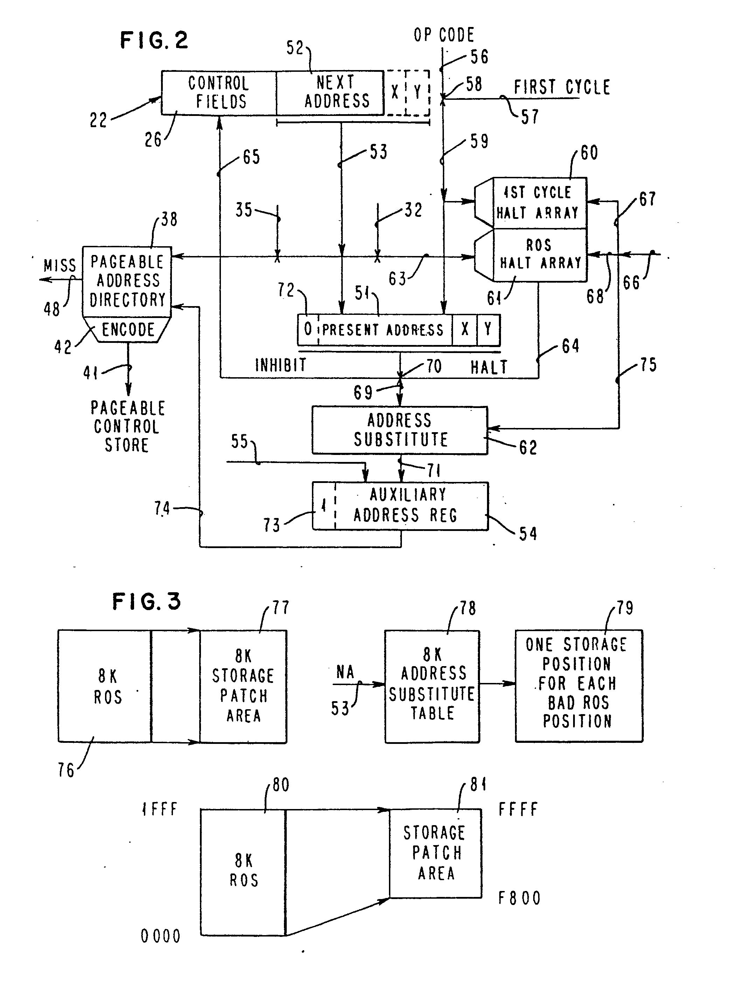

FIGURE 2 is a block diagram that includes certain portions of the apparatus disclosed in FIGURE 1. The same numeric designation has been utilized. Additional structure of a CSE in a contemporary data processing system is included in FIGURE 2. A Present Address Register 51 stores the complete address, including the XY branch bits, utilized to access a microinstruction for transfer to the CSDR 22. When the Next Address portion 52 of each microinstruction is transferred to the address decoding mechanism 30 or 31 shown in FIGURE 1, it is transferred on line 53 to the Present Address Register 51. The Present Address Register 51 therefore retains the address of each microinstruction transferred to, and stored in, CSDR 22 during the cycle that the control fields 26 are effective. Another register shown in FIGURE 2 is an Auxiliary Address Register 54 which is utilized in the contemporary data processing system to receive, on a line 55, control store address information from a number of other sources during the sequencing of the CSE.

Also added to the description of FIGURE 2 is an additional input to the CSE in accordance with the above cited Reference 1 which discloses the concept of a first cycle control store in the CSE. That is, on the first cycle of any machine instruction execution, the operation code of the machine instruction is utilized to access a control store element utilized only for the first cycle of machine instruction execution. FIGURE 2 shows a line 56 which receives the OP CODE portion of the machine instruction. When a signal on a line 57 indicates a first cycle of machine instruction execution, the gate 58 will be enabled to transfer the OP CODE bits on line 59 to the Present Address Register 51. Therefore, the Present Address Register 51 will store a representation of the OP CODE on line 56 during the cycle that the microinstruction accessed on the first cycle is stored in the CSDR 22.

As indicated previously, there are a number of situations in which there is a desire to change the normal sequencing of previously written microcode stored in the ROS 24 of FIGURE 1. These situations could include the detection of a permanent error in a microinstruction, a particular microinstruction may be proper but other hardware of the data processing system may cause an error condition which must be rectified, the microinstruction accessed from the first cycle control store may be faulty, or the data processing system may be required to respond to an OP CODE of a machine instruction which it was not originally designed to execute. In all of these situations, it is the primary object of the present invention to inhibit the normal functioning of a microinstruction transferred to CSDR 22 and substitute a microinstruction to be accessed from the PCS 25 of FIGURE 1.

The apparatus of the subject invention to achieve the above cited result includes a First Cycle Halt Array 60, a ROS Halt Array 61, and an Address Substitute mechanism 62. Each of the arrays 60 and 61 has a single bit storage position for each microinstruction that can conceivably create an error condition. If the OP CODE received on line 56 has eight bit positions, as is standard, the First Cycle Halt Array 60 will have 256 bit storage positions. In accordance with the preferred embodiment of the present invention, the ROS 24 will store 8K microinstructions, and therefore the ROS Halt Array 61 will be comprised of 8K bit storage positions.

When either the First Cycle Halt Array 60 or the ROS Halt Array 61 is accessed, either by the OP CODE on line 59, or the Next Address portion 52 on line 63, gated by the signal line 32 indicating a ROS 24 address, a binary "1" in the accessed bit storage position will provide a Halt signal on line 64 indicating an error situation, and will be effective on a line 65 to inhibit the operation of the control fields 26 of the microinstruction accessed from either the first cycle control store or the ROS 24 of FIGURE 1.

The Processor Controller 20 of FIGURE 1 is utilized during the initialization of the data processing system to provide the proper pattern of binary "1" and binary "0" for the First Cycle Halt Array 60 or the ROS Halt Array 61. This information is created by maintenance personnel, and during the initialization process, will be input to the arrays on lines 66, 67 and 68. As the need for changes to microinstruction execution are noted, the proper bit patterns will be created by maintenance personnel for storage in the halt arrays at the address associated with the microinstruction to be inhibited.

When a halt is indicated on signal line 64, the address stored in the Present Address Register 51 of the microinstruction is to be accessed, is transferred on a line 69 through a gate 70 to the Address Substitute mechanism 62. The Address Substitute mechanism 62 will then effect a translation of the address stored in the Present Address Register 51 to a main storage address for transfer on line 71 to the Auxiliary Address Register 54. As part of the address translation process, bit position 0 of the Present Address Register 51, shown as a binary "0" at 72, will be translated to a binary "1" shown at 73 in the Auxiliary Address Register 54. Thereafter, the address stored in Auxiliary Address Register 54, which is a main storage address, will be transferred on line 74 to the Pageable Address Directory 38 to initiate a normal PCS 25 access function as described in connection with FIGURE 1.

The Processor Controller 20 of FIGURE 1 is utilized to input information on lines 66 and 75 to provide, during the initialization process, the address in Main Storage 21 of FIGURE 1 of the microinstruction to be substituted for the erroneous microinstruction. The main storage address on line 75, to be associated with the erroneous microinstruction address in Present Address Register 51, will be stored in the Address Substitute mechanism 62 to thereafter be generated on line 71 whenever the erroneous microinstruction address is utilized.

FIGURE 3 shows a number of alternative methods by which main storage addresses for the substitute microinstruction can be created for entry into the Address Substitute mechanism 62 of FIGURE 2. One technique would require each of the 8K ROS addresses 76 to be provided with an associated main storage address 77 creating an 8K storage patch area 77. With this arrangement, the only requirement for the Address Substitute mechanism 62 of FIGURE 2 is to convert the address position 72 in the Present Address Register 51 from a binary "0" to a binary "1" in the Auxiliary Address Register 54. This alternative creates a very simple Address Substitute mechanism 62, but is very wasteful of main storage address space in that 8K main storage microinstruction addresses must be permanently reserved.

Another alternative is shown in FIGURE 3 where the next address (NA) bits 53 are utilized to address an 8K Address Substitute Table 78. That is, each possible 8K ROS address will have an addressable entry in the Address Substitute Table 78 only if the particular address provides access to an erroneous microinstruction. Therefore, the Address Substitute mechanism 62 of FIGURE 2 would not only detect an erroneous microinstruction, but provides the ability to reserve only one main storage position for each bad ROS position as indicated at 79. Therefore, with the inclusion of a comparatively expensive Address Substitute Table 78, a great deal of compression can be realized in Main Storage 21 with very little space set aside for substitute microinstructions.

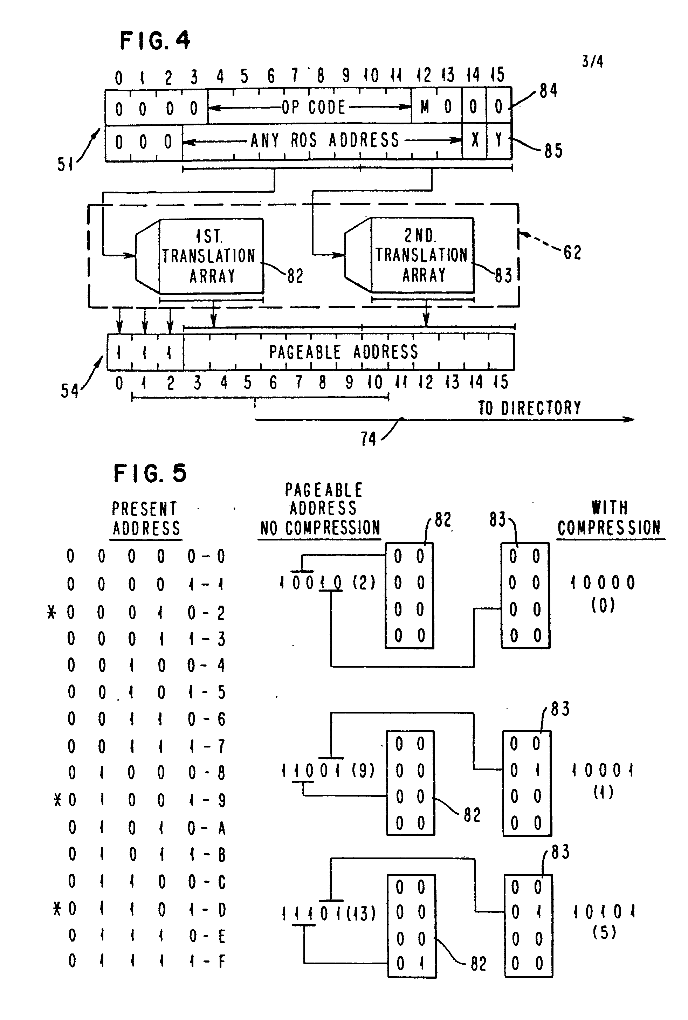

Preferred forms for the Address Substitute mechanism 62 of FIGURE 2 will be described subsequently, and are represented in FIGURE 3 at 80 and 81. An 8K ROS address space 80 can be compressed to a Storage Patch Area 81 which is a compromise between the amount of main storage addresses that must be reserved for substitute microinstructions, and the expense and efficiency of the address translation performed by the Address Substitute mechanism 62 of FIGURE 2. As represented, the 8K ROS addresses 80 range from 0000 to 1FFF (each position representing a hexadecimal digit comprised of four binary bits), to a Storage Patch Area 81 which ranges from main storage addresses F800 through FFFF, a total of 2K microinstruction addresses. Hexadecimal notation is fairly common, but the particular representation of four binary bits representing a hexadecimal digit is shown in FIGURE 5.

FIGURE 4 depicts the Address Substitute mechanism 62 described in Related Application 2 (US—A—3958227 or EP—A—66083), between the Present Address Register 51 and the Auxiliary Address Register 54 shown in FIGURE 2. The Address Substitute mechanism 62 is comprised of a First Translation Array 82 and a Second Translation Array 83. The format of an address to be translated may include a first cycle format shown at 84 or any other ROS address shown at 85. The address of a first cycle microinstruction includes an 8-bit OP CODE in bit positions 4 through 11. Also shown at 84 is a Mode bit M in position 12 which may signify the presence of an OP CODE in a data processing system having, for example, two different instruction sets. The remainder of the bit positions shown at 84 will be a binary "0". At 85, only bit positions 3 through 15 are needed to signify a ROS address range from 0 through 8K. Bit positions 0 through 2 will be a binary "0" in all cases, and signify a ROS address.

A translated address is to be inserted in the Auxiliary Address Register 54 from the First and Second Translation Arrays 82 and 83. Bit positions 0 through 2 comprise a prefix value which, in register 51, signify a ROS address and which will be altered to binary "1" to signify a main storage pageable address to be utilized in the PCS 25 access mechanism of FIGURE 1.

The desirable feature of providing compression of main storage addresses is achieved by providing a First Translation Array 82 and a Second Translation Array 83. The two arrays are each addressed utilizing first and second portions of the address information in the Present Address Register 51. That is, First Translation Array 82 is addressed by bit positions 3 through 9, and the Second Translation Array 83 is addressed by bit positions 10 through 15. The addressed positions in each of the arrays 82 and 83 will have been provided with proper main storage addresses as determined by maintenance personnel and received from the Processor Controller 20. The output of the First Translation Array 82 will provide a substitute address in bit positions 3 through 9, and the Second Translation Array 83 will provide substitute address information in bit positions 10 through 15. The substitute address provided to the Auxiliary Address Register 54 will then be transferred on line 74 to access the Pageable Address Directory 38 shown in FIGURE 2.

FIGURE 5 will be utilized to explain the theory behind the information to be stored into the First Translation Array 82 and Second Translation Array 83 of FIGURE 4, as determined by maintenance personnel when erroneous operation is recognized at particular ROS addresses. At the left of FIGURE 5 under the heading "Present Address" is shown an example of sixteen ROS addresses ranging from 0 through F in hexadecimal notation. The designation of a ROS address is shown by the leftmost binary bit position, all of which are a binary "0". Erroneous microinstruction operation at addresses "2", "9" and "D" are indicated by an asterisk. Under the heading "Pageable Address, No Compression" the address translation technique whereby only the highest order binary bit position is changed (from binary "0" to binary "1") shows that sixteen main storage addresses must be set aside for substitute microinstructions. At the right of FIGURE 5, under the heading "With Compression", the use of a First Translation Array 82 and Second Translation Array 83 is shown to provide a compression of the number of main storage addresses that must be set aside for substitute microinstructions.

As represented in FIGURE 5, the First Translation Array 82 will be addressed by the first two bits of the present address, and the Second Translation Array 83 will be addressed by the second two bits.

The error condition indicated at address number "2", causes the translation arrays 82 and 83 to be addressed as shown, and provide a translated address output of hexadecimal "0". A second erroneous address is noted at address "9". The first and second arrays 82 and 83 will be provided with translated addresses by the maintenance personnel to provide an output of hexadecimal "1".

When a third erroneous microinstruction at address "D" is recognized, the translated address information provided by the maintenance personnel must provide an output that will distinguish from the output provided when the translation arrays 82 and 83 are accessed by the erroneous address "9". The first translation array 82 is provided with the required information to create a unique translated address. This is accomplished by changing the location in the first translation array 82 addressed by the first two address bits to provide an output of "01". Thereafter, the translated address provided by the translation arrays 82 and 83 will result in a pageable address of hexadecimal "5" for the erroneous ROS address "D".

The Address Substitute mechanism 62 as implemented in accordance with FIGURE 4 has achieved unique translation and compression of main storage address requirements in an efficient and inexpensive manner. This was through a recognition that only a sub-set of 8K possible addresses would require a substitute microinstruction. A substantial reduction in size and cost of the translation arrays 82 and 83 over an 8K translation table providing sixteen bit outputs is readily apparent. Each of the arrays 82 and 83 can be readily available and inexpensive 256 × 8 memory chips, providing sufficient translation capabilities for the number of microinstructions actually needing substitution.

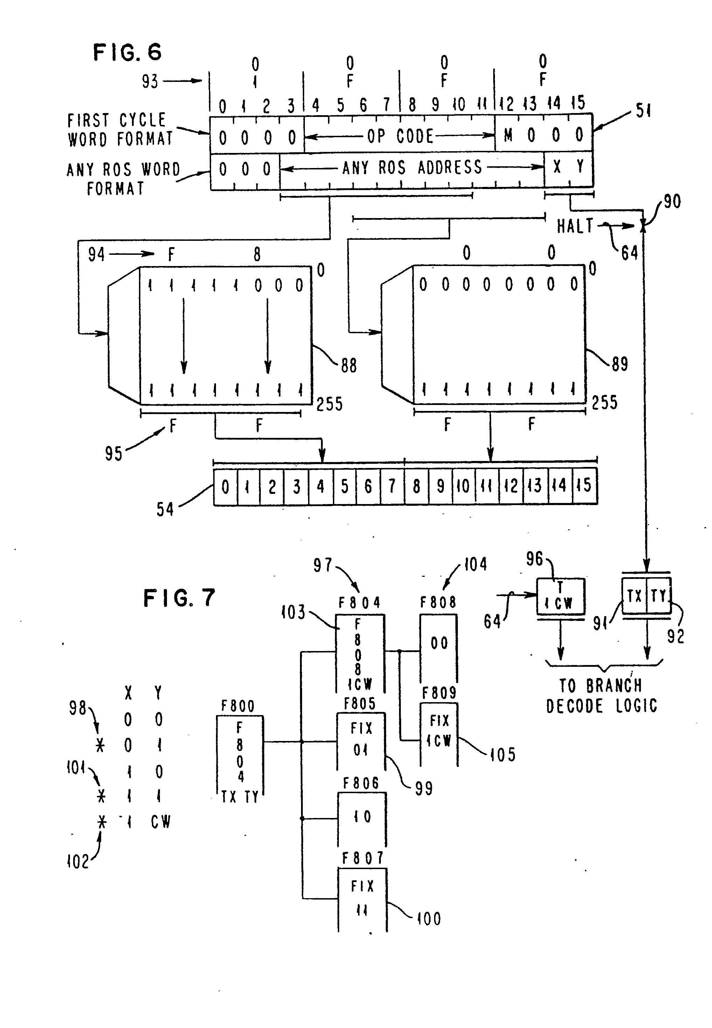

The present invention is depicted in FIGURE 6. Once again, a First Translation Array 88 and Second Translation Array 89 are provided. Each of these arrays are comprised of 256 locations, each providing an 8-bit output. The arrays 88 and 89 are addressed with 8 bits of the Present Address Register 51 which are provided in an overlapped fashion. That is, address bit positions 3—10 are utilized for addressing First Translation Array 88, and address bit positions 6 through 13 are utilized to address the Second Translation Array 89. The embodiment shown in FIGURE 6 differs from that shown in FIGURE 4 in that a third portion of the address in the Present Address Register 51, namely the low-order XY branch selection bits are gated by the Halt signal 64 effective at gate 90, to corresponding triggers 91 and 92 for subsequent use.

In FIGURE 6, only 2K microinstruction addresses in main storage are set aside for providing a substitute microinstruction for any of the 8K ROS microinstructions and the 256 possible first cycle microinstructions.

The Address Substitute mechanism 62 of FIGURE 2, shown in FIGURE 6, differs from FIGURE 4 in that the binary bit patterns in the First Translation Array 88 and Second Translation Array 89 can be made permanent and require no modification as erroneous microinstructions are subsequently detected. As shown, the range of ROS addresses, including addresses created during a first cycle, will range from a hexadecimal 0000 through 1FFF, as depicted at 93 totaling 8K. The 2K main storage addresses set aside in the reserved area 44 of FIGURE 1 are caused to have an address range from F800 shown at 94 to FFFF as shown at 95. These values can be inserted permanently in First Translation Array 88 and Second Translation Array 89, or flexibility can be given to maintenance personnel by allowing them to most efficiently create main storage addresses within these ranges as required. By providing permanent assignments, the maintenance personnel utilizing the Processor Controller 20 of FIGURE 1 will only be required to provide the necessary information to update the First Cycle Halt Array 60, or ROS Halt Array 61 of FIGURE 2, and create the necessary microinstructions for storage in their proper location in the reserved area 44 of FIGURE 1.

The 2K main storage microinstruction addresses reserved for translated addresses, creates what is known as a "synonym" problem. That is, the substitute address created in the Auxiliary Address Register 54, to be utilized in the PCS 25 access method of FIGURE 1, is associated with four possible ROS microinstructions and one possible first cycle microinstruction (1CW). The XY branch bits identify a particular microinstruction in a branch group, and are used for addressing the ROS Halt Array 61 of FIGURE 2. If more than one microinstruction in a particular branch group is in error, the address bits 3 through 13 utilized for addressing the First and Second Translation Arrays 88 and 89 will not provide a translated address which identifies the particular microinstruction requiring a substitute microinstruction.

The translated address inserted in the Auxiliary Address Register 54 will provide access to a microinstruction provided by the maintenance personnel which will be coded as a first type or second type. If only one microinstruction of a branch group is known to be in error, the translated address will access a substitute microinstruction of a first type that can be immediately executed in place of the faulty microinstruction. If a second microinstruction of a branch group is determined to be in error, then maintenance personnel must provide access to a microinstruction of a second type that has properly coded XY branch control fields to provide access to a substitute microinstruction associated with each of the faulty microinstructions in the branch group. In other words, the microinstruction accessed by the translated address through the PCS 25 access mechanism will include, as shown in FIGURE 1, an X branch code field 27 and a Y branch control field 28, which will be coded to sample the binary state of the triggers 91 and 92.

This concept is depicted in FIGURE 7. The XY branch bit combinations are shown at the left in FIGURE 7 along with a first cycle word (1CW) indication. In FIGURE 6, when the First Cycle Halt Array 60 of FIGURE 2 produces a Halt signal 64 during a first cycle, a trigger 96 will be set which can be subsequently sampled by a microinstruction branch decode control field.

As shown in FIGURE 7, two different microinstructions from a particular microinstruction branch group from ROS 24 of FIGURE 1 have been indicated as being in error by an output on line 64 of the ROS Halt Array 61 of FIGURE 2. The branch group identified by address bits 3 through 13 in the Present Address Register 51 are shown to provide an output from the First and Second Translation Arrays 88 and 89 providing a translated address F800 utilized for addressing Main Storage 21 of FIGURE 1. The microinstruction located at address F800 will be of the second type, and have an X branch decode field 27 and a Y decode branch field 28 specifying triggers 91 and 92 respectively for testing. The microinstruction located at F800 specifies a next address field F804 which will cause access from PCS 25 of a branch group of microinstructions depicted at 97. The particular one of the microinstructions in the branch group at 97 will be read out to the CSDR 22 based on the binary state of the X trigger 91 and Y trigger 92 of FIGURE 6. For example, if the Halt signal was generated by a microinstruction accessed by XY branch bits shown at 98, the sampling of the X trigger 91 and Y trigger 92 by the microinstruction at location F800 will provide readout into the CSDR 22 of FIGURE 1 of the microinstruction indicated at 99. This is a microinstruction of the first type, and will be the substitute microinstruction providing a repair for the erroneous microinstruction. In a like manner, the microinstruction shown at 100 in the branch group 97 would be transferred to the CSDR 22 at the substitute microinstruction for the one indicated as being in error at 101.

If it has been determined that a first cycle word (1CW) is in error, shown at 102, the microprogrammer providing a repair for this error condition would have inserted microinstructions into the reserved area 44 of Main Store 21 in FIGURE 1 in which the microinstruction at 103 would be coded as a microinstruction of a third type with a next address field that accesses a branch group of microinstructions depicted at 104. This is required to resolve the possibility that the microinstruction in error is from a ROS 24 branch group with XY branch bits of "00", and therefore one branch decode field must sample the 1CW trigger 96. The microinstruction at location F804 would have an X branch decode field 27 or Y branch decode field 28 which samples the first cycle trigger 96 to provide selection of the microinstruction of a first type noted at 105. The microinstruction shown at 105 would be the microinstruction to be substituted for the erroneous microinstruction encountered during that particular first cycle.

In the showing of FIGURE 7, the translated address F800 generated from the First Translation Array 88 and Second Translation Array 89, when presented to the Pageable Address Directory 38 of FIGURE 1, would probably create a miss-situation requiring access to the reserved area 44 of Main Storage 21. Access to Main Storage 21 returns on line 45 to PCS 25, a line of 32 microinstructions. Therefore, once access has been made for these 32 microinstructions, as shown in FIGURE 7, all of the remaining microinstructions that might be accessed as a result of accessing microinstructions at F800 will find a hit in the Pageable Address Directory 38 of FIGURE 1, providing immediate access to any of the subsequent microinstructions shown in FIGURE 7. Even though a synonym problem has been created by the apparatus shown in FIGURE 6, one or more microinstructions accessed by the translated address will resolve the synonym situation to identify the proper substitute microinstruction to be utilized.

## Claim

A microinstruction control storage system including a first storage means composed of a pageable control store (25) having a plurality of addressable microinstruction and substitute microinstruction locations and a read-only control store (24) having a plurality of addressable microinstruction locations and a second storage means (21) having a plurality of addressable microinstruction and substitute microinstruction locations, first addressing means (52, 38, 31 resp. 30) and second addressing means (52, 38, 46) associated with the first and second storage means respectively for accessing microinstructions or substitute microinstructions for transfer to a control register (22, 26) for execution, halt signalling means (60, 61) responsive to each address in said first addressing means for generating a halt signal (HALT) to prevent execution of functions called for by predetermined ones of the microinstructions, address substitution means (62), connected and responsive to the halt signalling means and a portion (bits 3—13) of the address in the first addressing means causing the halt signal, for transferring an address to the second addressing means for accessing a substitute microinstruction for transfer to the control register, the microinstructions being of a first type addressed by a portion of the operation code of a system instruction during a first instruction cycle or of a second type addressed by a next address information obtained from the preceding first type microinstruction during a second or further instruction cycle, characterized in, that the substitute microinstructions are accordingly of a first type which, if only one microinstruction of a branch group is in error, can be immediately executed in place of the faulty microinstruction, a second type which, if a second microinstruction of a branch group is in error, has properly coded branch control fields (X, Y) to provide access to a substitute microinstruction associated with each of the faulty microinstructions in the branch group, or if a first cycle instruction is in error, of a third type with a next address field that accesses a branch group of microinstructions, and that means (26, 91, 92, 96) responsive to a substitute microinstruction of said first and third type for controlling execution of functions prevented from execution by the predetermined one of the microinstructions and means (91, 92, 96, 52, 38) responsive to a substitute microinstruction of said second type for transferring a further address to the second addressing means are provided, whereby the second storage addresses for substitute microinstructions will be generated by address translation means (82, 83) with the next address bits (53) and whereby each possible first storage (ROS 24) address will have an addressable entry in the address translation means within the address substitution system (62) only if a particular address provides access to an erroneous microinstruction, so that the address substitution system (62) not only detects erroneous microinstructions but also reserves only one second storage portion for each bad first storage (ROS 24) position.

## Patentanspruch

Mikrobefehl-Steuerspeichersystem mit einem ersten Speicher aus einem seitenadressierten Steuerspeicher (25) mit mehreren adressierbaren Mikrobefehls- und Ersatzmikrobefehlsstellen, und einem Festwertspeicher (24) mit mehreren adressierbaren Mikrobefehlstellen, und einem zweiten Speicher (21) mit mehreren adressierbaren Mikrobefehls- und Ersatzmikrobefehlsstellen, ersten Adressiermitteln (52, 38, 31 bzw. 30) und zweiten Adressiermitteln (52, 38, 46), die mit den ersten bzw. zweiten Speichermitteln zum Zugriff auf die Mikrobefehle oder die Ersatzmikrobefehle zur Übertragung auf ein Steuerregister (22, 26) zur Ausführung verbunden sind, einem Stopanzeiger (60, 61), welcher auf jede Adresse in den ersten Adressiermitteln zum Erzeugen eines Stopsignales (HALT) anspricht, um die Ausführung von Funktionen zu verhindern, welche durch bestimmte Mikrobefehle aufgerufen worden sind, einem Adressenersatzmittel (62), welches mit dem Stopanzeiger und einem Teil (Bits 3 bis 13) der Adresse der ersten, das Stopsignal erzeugenden Adressiermittel verbunden ist und darauf anspricht, um eine Adresse zur zweiten Adressiervorrichtung zu übertragen für den Zugriff zu einem Ersatzmikrobefehl für dessen Übertragen zum Steuerregister, wobei es sich bei den Mikrobefehlen um einen ersten Typ handelt, welcher durch einem Teil des Operationscodes eines Systembefehls während eines ersten Befehlszyklus gesteuert wird, oder es sich um einen zweiten Typ handelt, welcher durch eine nächste Adresseninformation vom vorhergehenden Mikrobefehl des ersten Typs während eines zweiten oder weiterer Befehlszyklen gesteuert wird, dadurch gekennzeichnet daß die Ersatzmikrobefehle jeweils von einem ersten Typ sind, welcher, wenn nur ein Mikrobefehl einer Verzweigungsgruppe fehlerhaft ist, sofort anstelle des fehlerhaften Mikrobefehls ausgeführt werden kann, von einem zweiten Typ, welcher, wenn ein zweiter Mikrobefehl einer Verzweigungsgruppe fehlerhaft ist, über korrekt codierte Verzweigungssteuerfelder (X, Y) verfügt, um Zugriff zu einem Ersatzmikrobefehl zu liefern, welcher jedem der fehlerhaften Mikrobefehle in der Verzweigungsgruppe zugeordnet ist, oder, wenn ein Befehl des ersten Zyklus fehlerhaft ist, von einem dritten Typ mit einem nächsten Adressenfeld, welches Zugriff zu einer Verzweigungsgruppe von Mikrobefehlen gewährleistet, und daß Mittel (26, 91, 92, 96) vorgesehen sind, welche auf einen Ersatzmikrobefehl des ersten und dritten Typs ansprechen, zur Steuerung der Ausführung von Funktionen, die durch bestimmte Mikrobefehle und Mittel (91, 92, 96, 52, 38) an der Ausführung gehindert werden, welche auf einen Ersatzbefehl des zweiten Typs zur Übertragung einer weiteren Adresse zur zweiten Adressiervorrichtung ansprechen, wodurch die zweiten Speicheradressen für Ersatzmikrobefehle durch Adressenübertragungsmittel (82, 83) mit den nächsten Adressbits (53) erzeugt werden, und wodurch jede erste Speicher (ROS 24)-Adresse einen steuerbaren Eingang in der Adressenübertragungsvorrichtung innerhalb des. Adressenersatzsystems (62) nur dann aufweist, wenn eine bestimmte Adresse den Zugriff zu einem fehlerhaften Mikrobefehl liefert, sodaß das Adressenersatzsystem (62) nicht nur fehlerhafte Mikrobefehle findet, sondern außerdem nur einen zweiten Speicherteil für falsche erste Speicher (ROS 24)-Position reserviert.

## Revendication

Système de mémoire de commande par des microinstructions comprenant un premier moyen de mémoire, constitué d'une mémoire de commande organisée par pages (25) comprenant une pluralité d'emplacements de microinstructions adressables et de microinstructions de remplacement et une mémoire morte de commande (24) comprenant une pluralité d'emplacements de microinstructions adressables, et un second moyen de mémoire (21), comprenant une pluralité d'emplacements de microinstructions adressables et de microinstructions de remplacement, des premiers moyens d'adressage (58, 38, 31 resp. 30) et des seconds moyens d'adressage (52, 38, 46) associés aux premier et second moyens de mémoire, respectivement, pour accéder à des microinstructions ou à des microinstructions de remplacement pour transfert à une registre de commande (22, 26) pour exécution, des moyens de signalisation d'arrêt (60, 61) agissant en réponse à chaque adresse dans les premiers moyens d'adressage pour produire un signal d'arrêt (HALT) pour empêcher l'exécution de fonctions appelées par certaines prédéterminées des microinstructions, des moyens de substitution d'adresse (62) connectés et agissant en réponse aux moyens de signalisation d'arrêt et à une partie (bits 3—13) de l'adresse ·dans les premiers moyens d'adressage provoquant le signal d'arrêt, pour transférer une adresse aux seconds moyens d'adressage pour accéder à une microinstruction de remplacement pour transfert au registre de commande, les microinstructions étant d'un premier type adressé par une partie du code d'opération d'une instruction du système pendant une premier cycle d'instruction ou d'un second type adressé par une information d'adresse suivante obtenue à partir de la microinstruction du premier type précédente pendant un second cycle ou un autre cycle d'instruction, caractérisé en ce que les microinstructions de remplacement sont en conséquence d'un premier type qui, si seulement une microinstruction d'un groupe de branchement est en erreur, peut être immédiatement exécuté à la place de la microinstruction en erreur, d'un second type qui, si une seconde microinstruction d'un groupe de branchement est en erreur, comprend des domaines de commande de branchement convenablement codés (X, Y) pour permettre un accès à une microinstruction de remplacement associée à chacune des microinstructions en erreur dans le groupe de branchement, ou, si une instruction du premier cycle est en erreur, d'un troisième type avec un domaine d'adresse suivant qui a accès à un groupe de branchement de microinstructions, et en ce que des moyens (26, 91, 92, 96) agissant en réponse à une microinstruction de remplacement d'un premier et d'un troisième type pour commander l'exécution des fonctions dont l'exécution a été empêchée par ladite première déterminée des microinstructions et des moyens (91, 92, 96, 52, 38) agissant en réponse à des microinstructions de remplacement du second type pour transférer une autre adresse aux seconds moyens d'adressage sont prévus, d'où il résulte que les adresses de la seconde mémoire pour des microinstructions de remplacement seront produites par des moyens de traduction d'adresse (82, 83) avec les bits d'adresse suivants (53) et d'où il résulte que chaque adresse possible de la première mémoire (ROS 24) aura une entrée adressable dans le moyen de traduction d'adresse dans le système de substitution d'adresse (62) seulement si une adresse particulière assure un accès à une microinstruction erronée, de sorte que le système de substitution d'adresse (62) non seulement détecte des microinstructions erronées mais également réserve seulement une partie de la seconde mémoire pour chaque mauvaise position de la première mémoire (ROS 24).

# FIG. 1

FIG. 2

OP CODE

| CONTROL FIELDS | NEXT ADDRESS | X | Y |

22
26
52
56
58 — FIRST CYCLE
57

65
53
59

35
32

38

MISS

PAGEABLE ADDRESS DIRECTORY

ENCODE

48
42
41

PAGEABLE CONTROL STORE

1ST CYCLE HALT ARRAY

60
67

ROS HALT ARRAY

63
61
68
66

72
51

| O | PRESENT ADDRESS | X | Y |

INHIBIT
HALT
64

69
70

ADDRESS SUBSTITUTE

75

55
62
71

74
73

AUXILIARY ADDRESS REG

54

FIG. 3

| 8K ROS | 8K STORAGE PATCH AREA |

77
76

NA
53

| 8K ADDRESS SUBSTITUTE TABLE |

78

ONE STORAGE POSITION FOR EACH BAD ROS POSITION

79

1FFF

| 8K ROS | STORAGE PATCH AREA |

80
81

FFFF

F800

0000

## FIG. 4

|0|1|2|3|4|5|6|7|8|9|10|11|12|13|14|15|

84 — 0 0 0 0 ← OP CODE → M 0 0 0

85 — 0 0 0 ← ANY ROS ADDRESS → X Y

51

1ST. TRANSLATION ARRAY — 82

2ND. TRANSLATION ARRAY — 83

62

1 1 1 | PAGEABLE ADDRESS

54

|0|1|2|3|4|5|6|7|8|9|10|11|12|13|14|15|

74

TO DIRECTORY

## FIG. 5

| PRESENT ADDRESS | | PAGEABLE ADDRESS NO COMPRESSION | | WITH COMPRESSION |

0 0 0 0 0 - 0
0 0 0 0 1 - 1
✱ 0 0 0 1 0 - 2
0 0 0 1 1 - 3
0 0 1 0 0 - 4
0 0 1 0 1 - 5
0 0 1 1 0 - 6
0 0 1 1 1 - 7
0 1 0 0 0 - 8
✱ 0 1 0 0 1 - 9
0 1 0 1 0 - A
0 1 0 1 1 - B
0 1 1 0 0 - C
✱ 0 1 1 0 1 - D
0 1 1 1 0 - E
0 1 1 1 1 - F

1 0 0 1 0 (2)    82    83    1 0 0 0 0 (0)

1 1 0 0 1 (9)    82    83    1 0 0 0 1 (1)

1 1 1 0 1 (13)   82    83    1 0 1 0 1 (5)

3

## FIG. 6

## FIG. 7

TO BRANCH
DECODE LOGIC